# EUROPÄISCHE PATENTSCHRIFT

(11) **EP 1 273 396 B1**
(45) Veröffentlichungstag und Bekanntmachung des Hinweises auf die Patenterteilung: **30.12.2009**
(21) Anmeldenummer: 02012690.0
(22) Anmeldetag: 07.06.2002
(51) Int. Cl.: B25D 17/02, B23B 51/02

(54) **Meissel bzw. Hammerbohrer**
Chisel resp. drill bit
Ciseau resp. forêt

(30) Priorität: 06.07.2001 DE 10132292; 28.02.2002 DE 10208628
(43) Veröffentlichungstag der Anmeldung: 08.01.2003
(73) Patentinhaber: ROBERT BOSCH GMBH, 70442 Stuttgart (DE); Aresi S.p.A., 24041 Brembate Sotto Bergamo (IT)
(72) Erfinder: Lang, Marco, Dr., 88213 Ravensburg (DE); Koljaka, Franc, 24121 Bergamo (IT); Dresig, Friedmar, 09113 Chemnitz (DE); Bernhardt, Thomas, 72631 Aichtal (DE)
(74) Vertreter: Eisele, Otten, Roth & Dobler

(56) Entgegenhaltungen:
- EP-A- 0 278 288
- DE-A- 2 542 001
- DE-A- 4 024 650
- DE-A- 19 610 478
- DE-A- 19 914 522
- US-A- 3 645 642

## Beschreibung

Die Erfindung betrifft einen Meißel bzw. einen Hammerbohrer nach dem Oberbegriff des Anspruchs 1.

Für die Wirksamkeit eines Meißels ist neben beispielsweise der Ausgestaltung der Schneide und dem verwendeten Material auch die Form des Meißelschaftes ausschlaggebend. Aus der DE 40 24 650 A1 ist beispielsweise ein Meißel bekannt, bei dem sich der Durchmesser des Meißelschaftes vom Einsteckende zur Meißelspitze hin in Stufen verjüngt, wobei auch eine Einschnürung vorgesehen sein kann. Weiterhin ist aus dem DE-GM 92 09 647 ein Meißel bekannt, der als Schmiedeteil ausgeführt ist und dessen Schaft sich zum Arbeitsende hin konisch verjüngt und ebenfalls eine Einschnürung aufweisen kann. Aus der DE 199 14 522 A1 ist ein Meißel mit einem sechskantförmigen Einsteckende bekannt, der einen Bund zwischen Einsteckende und Schaft aufweist. Dieser Bund hat ausschließlich die Funktion und Wirkung eines Anschlages. Die beiden erstgenannten, bekannten Meißel weisen den Nachteil auf, dass sich der Durchmesser des Schaftes zur Meißelschneide hin verjüngt und die Stabilität des Meißelschaftes zum Arbeitsende hin stetig bzw. schrittweise abnimmt. Eine derartige Formgebung ist insbesondere bei Meißeln mit einem mittleren und kleineren Ausgangsdurchmesser des Meißelschaftes und bei Meißeln mit langen Meißelschäften kritisch, da in Folge der Verjüngung schnell ein Meißelschaftdurchmesser erreicht wird, der aufgrund der an den Meißelschaft gestellten mechanischen Minimalanforderungen in einem kritischen Bereich liegt und ungewollten Schwingungen nur wenig entgegenwirkt. Diese Betrachtungen gelten analog auch für Hammerbohrer im Hinblick auf deren schlagende bzw. meißelnde Eigenschaft. Auf dem Gebiet der Bohrer sind sogenannte Bundbohrer bekannt (siehe z.B. DE 43 22 588 A1, Fig. 3), welche im Schaft- bzw. Wendelbereich eine Verdickung aufweisen. Diese ist in ihrer Lage auf die vorgesehene Bohrtiefe abgestimmt. Größe und Form dieser Verdickung zielen darauf ab, das zu bearbeitende Werkstück beim Erreichen der gewünschten Bohrtiefe möglichst weitgehend zu schonen.

Der Erfindung liegt die Aufgabe zugrunde, einen Meißel bzw. Hammerbohrer der eingangs beschriebenen Art zu entwickeln, dessen Schaft eine Form aufweist, die sich günstig auf die Wirksamkeit und das Schwingungsverhalten des Meißels bzw. Hammerbohrers auswirkt, aber nicht zu einer aus mechanischer Sicht kritischen Verjüngung des Durchmessers des Schaftes führt.

Diese Aufgabe wird in Verbindung mit dem Oberbegriff des Anspruchs 1 erfindungsgemäß durch die kennzeichnenden Merkmale des Anspruchs 1 gelöst. In den Unteransprüchen sind vorteilhafte und zweckmäßige Weiterbildungen angegeben.

Weiterhin sieht die Erfindung vor, den dritten, kleinen Durchmesser bzw. die dritte, kleine Querschnittsfläche eines ersten Wulstes etwa genauso groß wie den ersten, kleinen Durchmesser bzw. die erste, kleine Querschnittsfläche eines zweiten Wulstes auszuführen. Durch derartige Abmessungsverhältnisse erhält ein Übergangsbereich zwischen zwei Wülsten eine Form gleichbleibenden Querschnitts.

Vorteilhafte Eigenschaften erhält der Meißel bzw. der Hammerbohrer insbesondere dann, wenn der erste und dritte, kleine Durchmesser ein Verhältnis von etwa 1 : 1,6 zum zweiten, großen Durchmesser aufweist. Vorteilhaft ist es auch, wenn der dritte und erste, kleine Durchmesser ein Verhältnis von etwa 1 : 1,2 zum zweiten, großen Durchmesser aufweist.

Die Erfindung sieht weiterhin vor, wenigstens zwei Wulste in identischer Orientierung hintereinander anzuordnen. Hierdurch entsteht eine Art Reihenschaltung, bei der sich die positiven Eigenschaften der einzelnen Wulste gegenseitig ergänzen.

Weiterhin sieht die Erfindung vor, die Lage des Wulstes am Hammerbohrer bzw. am Meißel in Abhängigkeit von der Länge eines im kraftangetriebenen Bohrhammer bzw. im Meißelhammer arbeitenden Schlägers vorzunehmen. Hierdurch ist es möglich Hammerbohrer und Meißel auf einen speziellen kraftangetriebenen Bohrhammer bzw. Meißelhammer zu auszulegen bzw. für eine ganze Baureihe von kraftangetriebenen Bohrhämmern bzw. Meißelhämmern zu optimieren. Optimal ist es, wenn der Wulst zum hinteren Ende des Hammerbohrers bzw. Meißels einen Abstand aufweist, welcher etwa der 2 bis 4-fachen Länge des Schlägers entspricht. Es ist auch vorgesehen, den Hammerbohrer bzw. den Meißel hinsichtlich des Gewichts des Wulstes, welches dessen Wirkweise ebenfalls maßgeblich mitbestimmt, auf den kraftangetriebenen Bohrhammer bzw. Meißelhammer anzupassen. Hierdurch lässt sich eine optimale Wirkung des Wulstes erzielen. Diese ist gegeben, wenn dessen Masse auf das Gewicht des Schlägers im kraftangetriebenen Bohrhammer bzw.

Meißelhammer abgestimmt ist und etwa das 0,2 bis 0,7-fache der Schlägermasse beträgt.

Weitere Einzelheiten der Erfindung werden in der Zeichnung anhand von schematisch dargestellten Ausführungsbeispielen beschrieben.

Hierbei zeigt:
- Figur 1 - 9:: nicht zur Erfindung zugehörige Ausführungsbeispiele,
- Figuren 10a bis 10f: Seitenansichten und Draufsichten von drei erfindungsgemäßen Hammerbohrern mit sich in Wirkrichtung der Hammerbohrer verdickenden Wülsten und
- Figur 11a - 14d: weitere nicht zur Erfindung gehörige Ausführungsbeispiele.

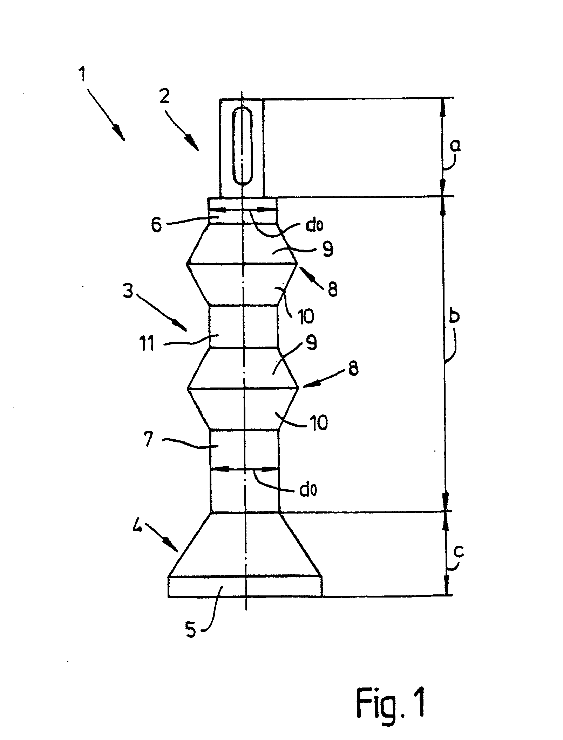

In Figur 1 ist eine Seitenansicht eines Meißels 1 dargestellt. Der Meißel 1 setzt sich aus einem Einsteckende 2, einem Meißelschaft 3 und einem Arbeitsende 4 mit einer Schneide 5 zusammen. Das Einsteckende 2 erstreckt sich über einen Einsteckbereich a, der Meißelschaft 3 erstreckt sich über einen Schaftbereich b und das Arbeitsende 4 erstreckt sich über einen Arbeitsbereich c. Der Meißelschaft 3 weist zum Einsteckende 2 und zum Arbeitsende 4 einen Ausgangsdurchmesser d₀ auf. Zwischen einem oberen Meißelschaftabschnitt 6 und einem unteren Meißelschaftabschnitt 7 sind am Meißelschaft 3 zwei Wulste bzw. Verdickungen bzw. Stauchungen 8 ausgeführt. Die Verdickungen 8 setzen sich jeweils aus zwei Kegelstümpfen 9, 10 mit kreisförmigem Querschnitt zusammen. Zwischen den Verdickungen 8 weist der Meißelschaft 3 einen mittleren Meißelschaftabschnitt 11 auf, welcher im Querschnitt dem oberen und unteren Meißelschaftabschnitt 6, 7 entspricht.

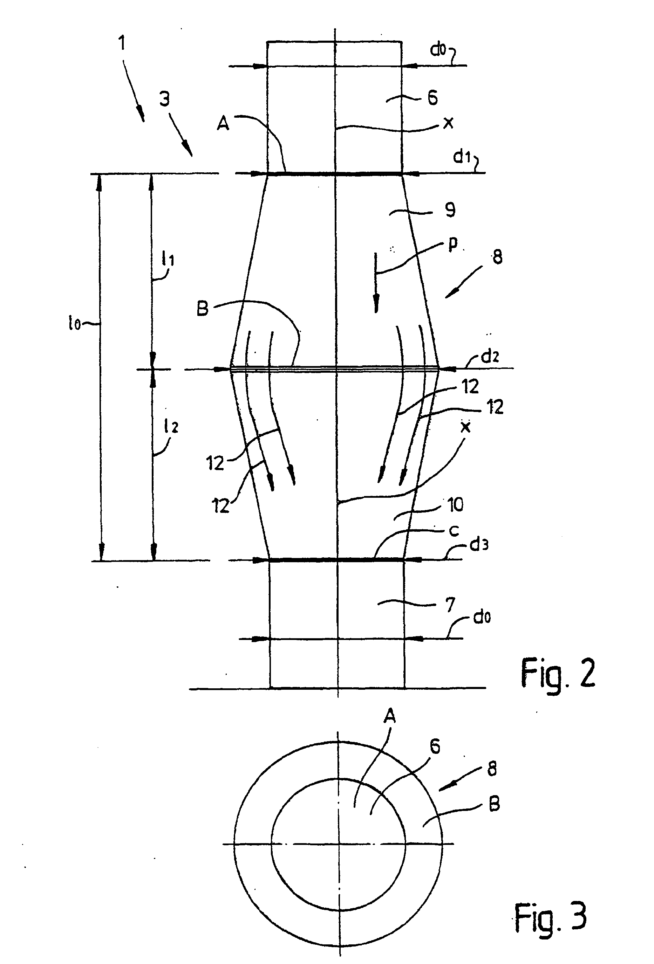

Figur 2 zeigt einen Meißelschaft 3 eines Meißels 1, wobei zur Vereinfachung auf die Darstellung eines Einsteckendes und eines Arbeitsendes verzichtet wurde. Der Meißelschaft 3 weist wie der in Figur 1 dargestellte Meißelschaft eine Verdickung 8 auf, die durch zwei Kegelstümpfe 9, 10 gebildet ist. Oberhalb der Verdickung 8 geht der Meißelschaft 3 in einen oberen Meißelschaftabschnitt 6 über. Unterhalb der Verdickung 8 geht der Meißelschaft 3 in einen unteren Meißelschaftabschnitt 7 über. Die Meißelschaftabschnitte 6, 7 weisen identische Ausgangsdurchmesser d₀ auf. Die Verdickung 8 wächst in Stoßrichtung p von einem ersten, kleinen Durchmesser d₁, der dem Ausgangsdurchmesser d₀ entspricht, auf einen zweiten, großen Durchmesser d₂ an und nimmt anschließend im Bereich des Kegelstumpfes 10 auf einen dritten, kleinen Durchmesser d₃ ab, welcher wiederum dem Ausgangsdurchmesser d₀ entspricht. Im Bereich des Kegelstumpfes 10 werden von einem nicht dargestellten kraftangetriebenen Bohr- oder Meißelhammer auf den Meißel 1 bzw. den Meißelschaft 3 einwirkende Stoßwellen 12 zu einer Längsmittelachse x des Meißels 1 hin konzentriert und sorgen somit für eine effektive Weiterleitung der eingeleiteten Energie. Die Verdickung 8 erstreckt sich über eine Länge l₀, wobei sich die Kegelstümpfe 9, 10 über die Längen l₁ und l₂ erstrecken. Die Längen l₁ und l₂ sind in etwa identisch.

Figur 3 zeigt eine Draufsicht auf den in Figur 2 dargestellten Meißelschaft. Der obere Meißelschaftabschnitt 6 und die Verdickung 8 weisen kreisförmige Querschnitte A, B auf. Entsprechend der Durchmesseränderung vergrößert sich der Querschnitt A des Meißelschaftabschnitts 6 über die Strecke l₁ auf den maximalen Querschnitt B der Verdickung 8 und nimmt dann wiederum auf einen Querschnitt C (siehe Figur 2) des unteren Meißelschaftabschnitts 7 ab.

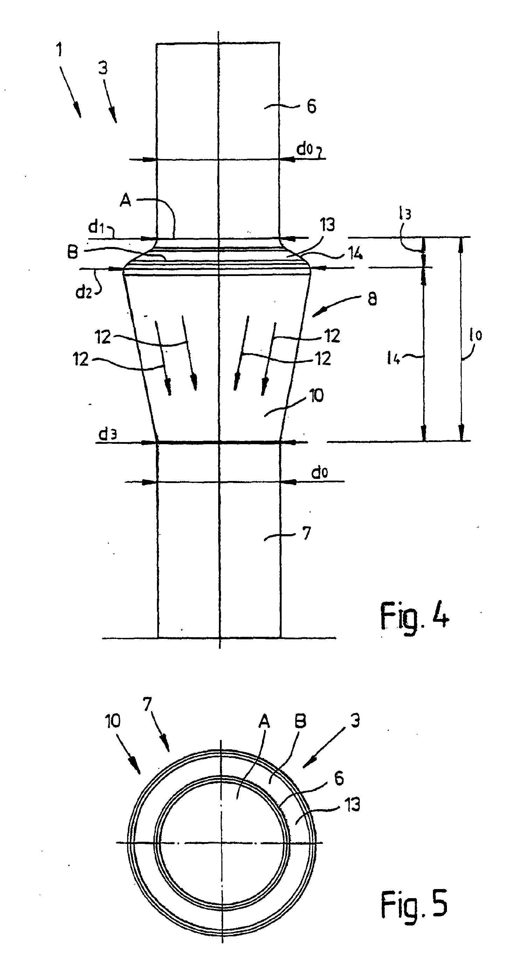

Figur 4 zeigt einen weiteren Meißel 1, von dem zur Vereinfachung nur ein Meißelschaft 3 dargestellt ist. Zwischen einem oberen Meißelschaftabschnitt 6 und einem unteren Meißelschaftabschnitt 7 ist eine Verdickung 8 angeordnet, welche sich aus einem Kegelstumpf 10 und einem Rotationskörper 13 zusammensetzt. Der Rotationskörper 13 weist eine kurvenförmige Mantellinie 14 auf, welche in etwa s-förmig verläuft. Im Bereich der Verdickung 8 steigt der Durchmesser des Meißelschaftes 3 von einem ersten, kleinen Durchmesser d₁ auf einen zweiten, großen Durchmesser d₂ an und fällt dann wieder auf einen dritten, kleinen Durchmesser d₃ zurück. Hierbei entsprechen die Durchmesser d₁, d₃ Durchmessern d₀ der Meißelschäfte 6, 7. Die Durchmesserzunahme bzw. die Durchmesserabnahme der Verdickung 8 erfolgt über Längenabschnitte l₃ und l₄, die in einem Verhältnis von etwa 1 : 5 stehen. Das heißt, die Durchmesserzunahme erfolgt schneller als die Durchmesserabnahme. Hierdurch ist eine langsame Konzentration von Stoßwellen 12 auf den unteren Meißelschaftabschnitt 7, welcher in ein nicht dargestelltes Arbeitsende übergeht, möglich.

Figur 5 zeigt eine Draufsicht auf den in Figur 4 dargestellten Meißelschaft 3. Der obere Meißelschaftabschnitt 6 und der Rotationskörper 13 weisen kreisrunde Querschnitte A, B auf. Dies gilt auch für den Kegelstumpf 10 und den unteren Meißelschaftabschnitt 7.

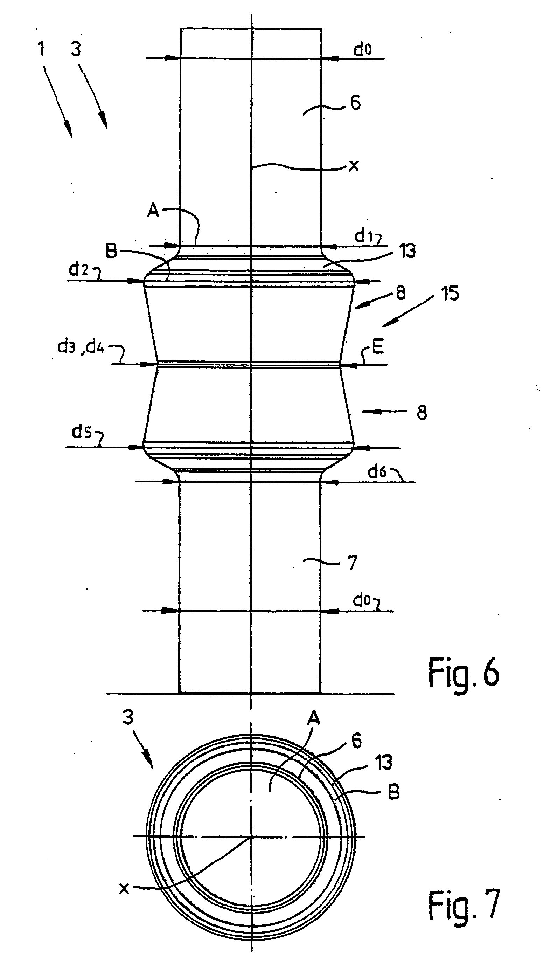

Figur 6 zeigt einen weiteren Meißel 1, von dem zur Vereinfachung nur ein Meißelschaft 3 dargestellt ist. Der Meißelschaft 3 weist zwischen einem oberen Meißelschaftabschnitt 6 und einem unteren Meißelschaftabschnitt 7 zwei Verdickungen 8 auf, welche direkt aneinander stoßen bzw. direkt ineinander übergehen. Die beiden Verdickungen 8 sind spiegelsymmetrisch zu einer Spiegelebene E ausgebildet, durch welche eine Meißellängsachse x senkrecht verläuft. Die obere Verdickung 8 nimmt von einem Durchmesser d₁ auf einen Durchmesser d2 zu und anschließend wieder auf einen Durchmesser d₃ ab. Der Durchmesser d₃ der oberen Verdickung 8 entspricht dem ersten, kleinen Durchmesser d₄ der unteren Verdickung 8, welche vom Durchmesser d4 auf einen Durchmesser d₅ zunimmt und anschließend wieder auf einen Durchmesser d₆ abnimmt. Der Anfangsdurchmesser d₁ und der Enddurchmesser d₆ eines durch die beiden Verdickungen 8 gebildeten Doppelwulstes 15 entspricht Ausgangsdurchmessern d₀ der Meißelschaftabschnitte 6, 7. Der Doppelwulst 15 besitzt insbesondere auch schwingungsdämpfende Eigenschaften, die helfen, ungewollte Schwingungen des Meißels 1 zu vermeiden.

Figur 7 zeigt eine Draufsicht auf den in Figur 6 dargestellten Meißelschaft 3. Der obere Meißelschaftabschnitt 6 und ein Rotationskörper 13 der oberen Verdickung 8 weisen kreisförmige Querschnitte A, B auf. Der Meißelschaft 3 ist in seinem gesamten Bereich rotationssymmetrisch ausgebildet und weist somit senkrecht zur Längsmittelachse x kreisförmige Querschnitte auf.

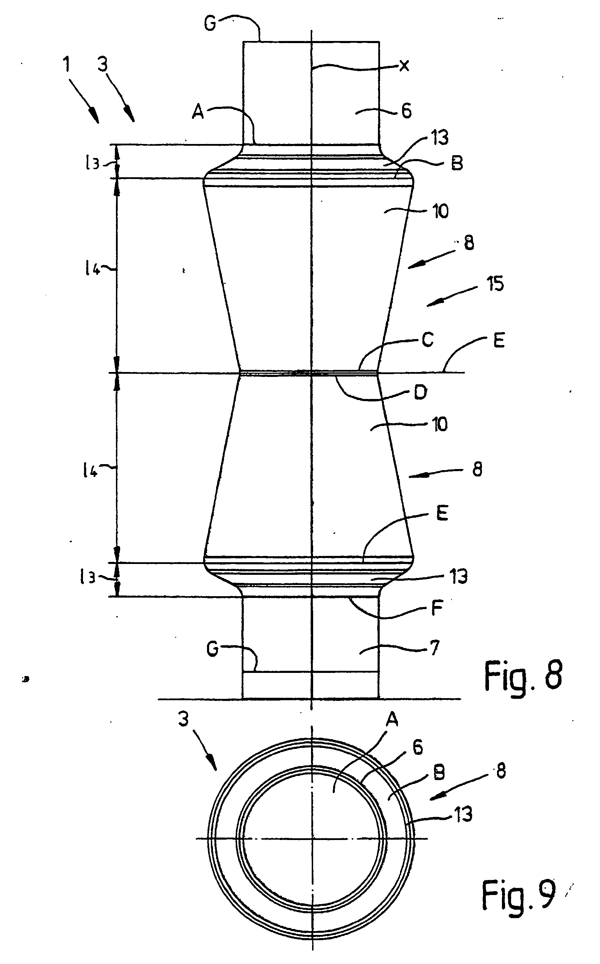

Figur 8 zeigt einen weiteren Meißel 1, von dem zur Vereinfachung nur ein Meißelschaft 3 dargestellt ist. Der Meißelschaft 3 weist analog zu dem in Figur 6 dargestellten Meißelschaft einen Doppelwulst 15 auf, welcher aus zwei Verdickungen 8 besteht, die spiegelsymmetrisch zu einer Ebene E angeordnet sind, auf welcher eine Längsmittelachse x des Meißelschafts 3 senkrecht steht. Die Verdickungen bestehen jeweils aus einem Rotationskörper 13 und einem Kegelstumpf 10 und erstrecken sich über Längenabschnitte l₃, l₄, die in einem Verhältnis von etwa 1 : 6 stehen. Die obere Verdickung 8 nimmt zunächst von einem Querschnitt A auf einen Querschnitt B zu und dann wieder auf einen Querschnitt C ab. Dieser entspricht einem kleinen Querschnitt D der unteren Verdickung 8, die auf einen Querschnitt E zunimmt und anschließend wieder auf einen Querschnitt F abnimmt. Die Querschnitte A, C, D und F entsprechen einem Querschnitt G von Meißelschaftabschnitten 6, 7.

Figur 9 zeigt eine Draufsicht auf den in Figur 8 dargestellten Meißelschaft 3. Diese zeigt einen kreisförmigen Querschnitt A eines Meißelschaftabschnitts 6 und einen kreisförmigen Querschnitt B des die obere Verdickung 8 teilweise bildenden Rotationskörpers 13.

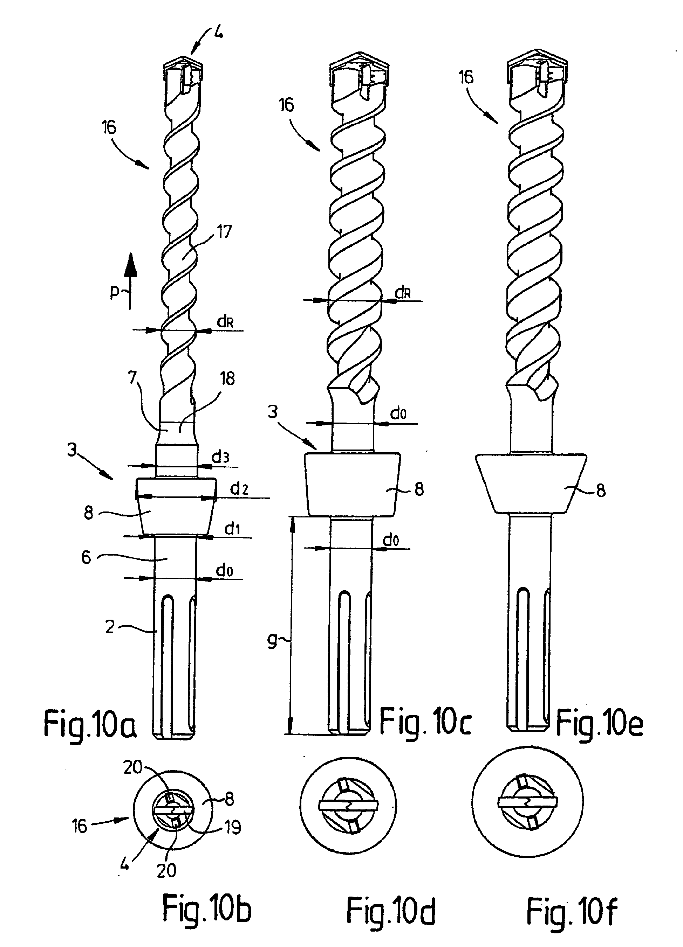

In Figur 10a ist eine Seitenansicht eines erfindungsgemäßen Hammerbohrers 16 dargestellt. Dieser weist einen Bohrerschaft 3 auf, welcher aus einem Einsteckende 2, einem oberen Bohrerschaftabschnitt 6, einer an diesen anschließenden Verdickung 8, einem unteren Bohrerschaftabschnitt 7, einer Wendel 17 und einen Bohrerkopf 4 besteht. Ausgehend von einem Ausgangsdurchmesser d₀ des oberen Bohrerschaftabschnitts 6 nimmt der Wulst 8 von einem dem Ausgangsdurchmesser d₀ entsprechenden ersten Durchmesser d₁ nahezu sprunghaft und anschließend langsam auf einen zweiten, großen Durchmesser d2 zu und verjüngt sich danach auf einem kurzen Abschnitt auf einen dritten, kleineren Durchmesser d₃, welcher dem ersten Durchmesser d₁ entspricht. In eine Wirkrichtung p nimmt der untere Bohrerschaftabschnitt 7 über einen Absatz 18 von einem Durchmesser d₀ bzw. d₃ auf einen Rückendurchmesser d_{R} der Wendel 17 ab.

Figur 10b zeigt eine Draufsicht auf den in Figur 10a dargestellten Hammerbohrer 16. In der Draufsicht ist die rotationssymmetrische Ausführung der Verdickung 8 erkennbar. Im Bohrerkopf 4 ist eine Schneidplatte 19 erkennbar, welcher zwei Hilfsschneiden 20 zugeordnet sind.

In Figur 10c ist ein weiterer erfindungsgemäßen Hammerbohrer 16 abgebildet, welcher prinzipiell den selben Aufbau aufweist wie der in Figur 10a dargestellte Hammerbohrer. Im Unterschied zu diesem weist der in Figur 10c dargestellte Hammerbohrer 16 einen Rückendurchmesser d_{R} auf, welcher größer ist als ein Ausgangsdurchmesser d₀ des Bohrerschafts 3. Ein Wulst 8 des Hammerbohrers 16 weist von einem Einsteckende 2 des Hammerbohrers 16 einen Abstand g auf. Der Abstand g liegt in der Praxis bei etwa 140 bis 150 mm und berechnet sich aus einer Länge eines in einem Bohrhammer angeordneten Schlägers multipliziert mit einem Faktor 2 bis 4. Beispielsweise weist der Schläger eines Bohrhammer der 5 kg-Klasse eine Länge von 30 bis 40 mm auf. Bei einem Bohrhammer der 7 kg-Klasse liegt die Schlägerlänge bei etwa 50 bis 60 mm. Ein Gesteinsbohrhammer der 10 bis 11 kg-Klasse besitzt einen Schläger mit einer Länge von größer 60 mm. Übliche Hammerbohrer 16 besitzen eine Gesamtlänge von etwa 520 mm, wobei der Bohrerkopf 4 und die Wendel 17 in etwa 340 mm einnehmen. Die Schaftlänge liegt dann bei etwa 180 mm.

Figur 10d zeigt analog zu Figur 10b eine Draufsicht auf den in Figur 10c dargestellten Hammerbohrer.

In den Figuren 10e und 10f ist eine weitere Variante eines erfindungsgemäßen Hammerbohrers 16 abgebildet. Dieser weist einen im Querschnitt trapezförmig gestalteten Wulst 8 auf.

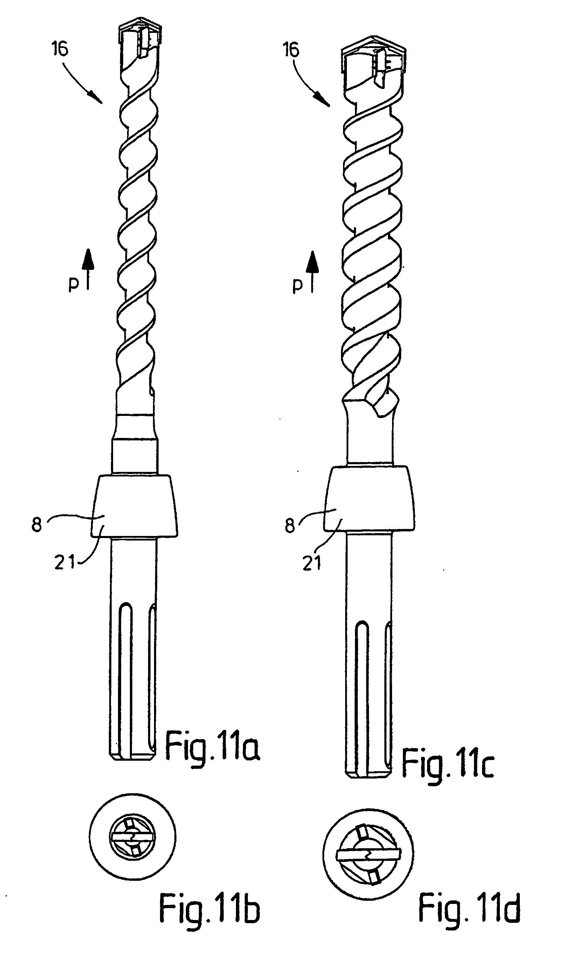

Die Figuren 11a bis 11g zeigen zwei weitere Hammerbohrer 16 in Seitenansicht und Draufsicht. Die Hammerbohrer 16 weisen Wülste 8 auf, welche als in eine Wirkrichtung p orientierte Kegelstümpfe 21 ausgebildet und angeordnet sind.

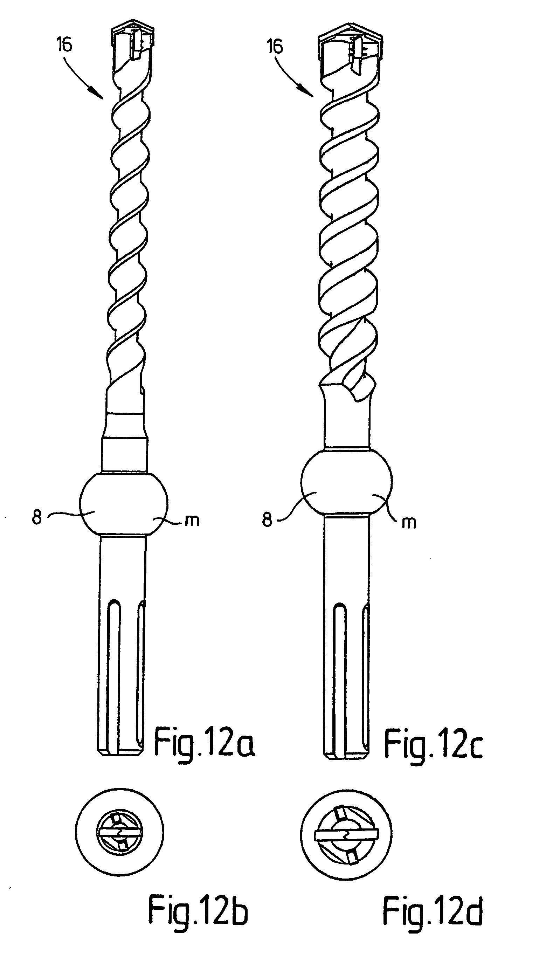

In den Figuren 12a bis 12d sind zwei Ausführungsvarianten von Hammerbohrern 16 abgebildet, welche Wülste 8 aufweisen, die als kugelförmige Verdickung ausgebildet sind. Gegenüber einem Hammerbohrer ohne Wulst ist die Masse des Hammerbohrers mit Wulst 8 um eine Differenzmasse m erhöht. Die durch den Wulst 8 bewirkte zusätzliche Masse m liegt beispielsweise bei etwa 80 g und beträgt in etwa das 0,2 bis 0,7-fache einer Masse eines Schlägers eines Bohrhammer. Beispielsweise beträgt die Schlägermasse eines sogenannten
5 kg-Bohrhammers etwa 125 g, bei einem 7 kg- Bohrhammer wiegt der Schläger etwa 205 g und bei einem 10 bzw. 11 kg-Bohrhammer liegt das Gewicht des Schlägers in Bereich von etwa 440 g.

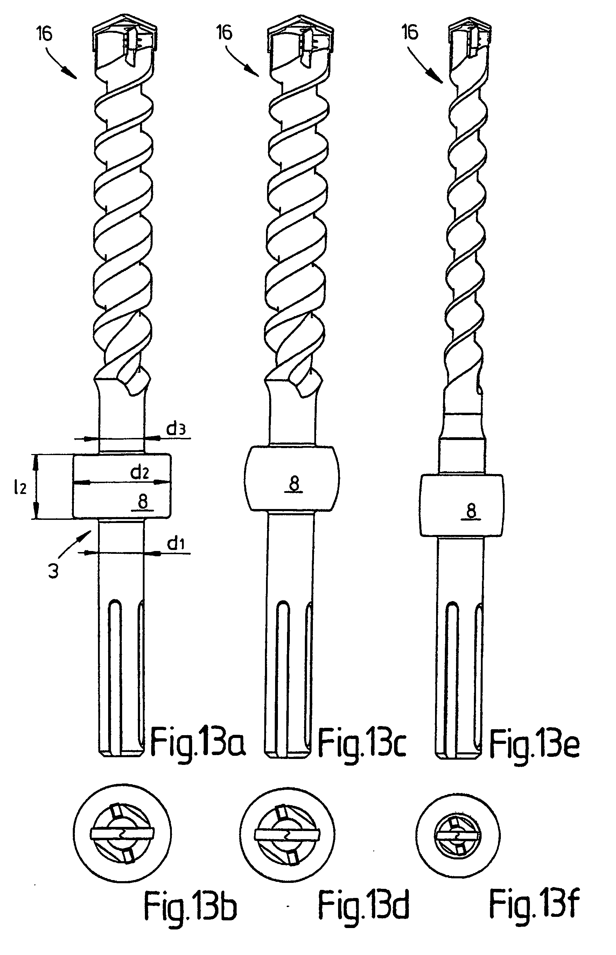

In den Figuren 13a bis 13f sind drei weitere Hammerbohrer 16 abgebildet. Charakteristisch für diese Hammerbohrer ist, dass der Durchmesser eines Schaftes 3 von einem kleinen Durchmesser d₁ sprunghaft auf einen großen Durchmesser d₂ zunimmt, über einen Abschnitt l₂ konstant oder annähernd konstant auf dem großen Durchmesser d₂ bleibt und danach schlagartig auf einen dritten kleineren Durchmesser d₃ abnimmt.

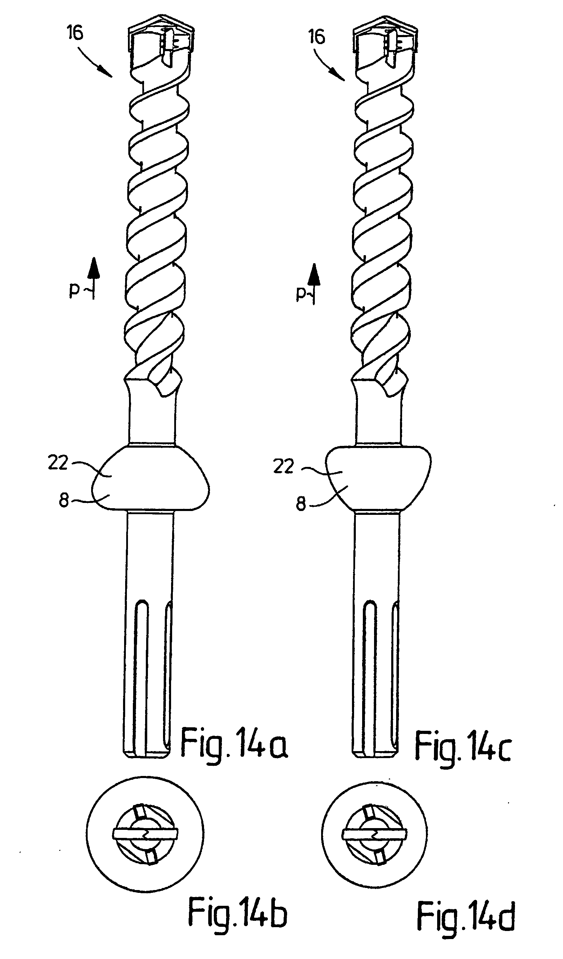

In den Figuren 14a bis 14d sind zwei weitere Hammerbohrer 16 abgebildet. Diese weisen Wülste 8 auf, welche etwa die Form eines Pilzdaches 22 aufweisen. Hierbei sind die Pilzdächer 22 der in den Figuren 14a, 14b, bzw. 14c, 14d dargestellten Hammerbohrer 16 in eine Schlagrichtung p unterschiedlich orientiert.

Die in den Figuren 1 bis 9 für Meißel dargestellten Wülste können ebenso bei Hammerbohrern zum Einsatz kommen. Auch die in den Figuren 10a bis 14d dargestellten Wülste für Hammerbohrer können vorteilhaft bei Meißeln eingesetzt werden. Auch die zu den Figuren 10a bis 14d gemachten Ausführungen hinsichtlich der Lage der Verdickung bzw. hinsichtlich der Masse der Verdickung gelten analog für Meißel.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche. Insbesondere sieht die Erfindung auch die Anordnung mehrerer voneinander beabstandeter Verdickungen im Bereich des Schafts vor. Weiterhin ist es auch vorgesehen, unterschiedlich ausgeführte Verdickungen ineinander übergehen zu lassen. Eine weitere Ausführungsvariante der Erfindung sieht vor, den Schaft um die Längsachse zu verdrehen, wobei wahlweise auch eine Verdrehung der Verdickung, insbesondere einer nicht rotationssymmetrischen Verdickung vorgesehen ist.

### Bezugszeichenliste:

- 1: Meißel
- 2: Einsteckende
- 3: Meißelschaft / Bohrerschaft
- 4: Arbeitsende / Meißelkopf / Bohrerkopf
- 5: Schneide
- 6: oberer Meißel- bzw. Bohrschaftabschnitt
- 7: unterer Meißel- bzw. Bohrschaftabschnitt
- 8: Wulst bzw. Verdickung bzw. Stauchung
- 9: Kegelstumpf
- 10: Kegelstumpf
- 11: mittlerer Meißel- bzw.
Bohrschaftabschnitt
- 12: Stoßwelle
- 13: Rotationskörper
- 14: Mantellinie
- 15: Doppelwulst
- 16: Hammerbohrer
- 17: Wendel
- 18: Absatz
- 19: Schneidplatte
- 20: Hilfsschneide
- 21: Kelgelstumpf
- 22: Pilzdach
- a: Einsteckbereich
- b: Schaftbereich
- c: Arbeitsbereich
- d₀: Ausgangsdurchmesser
- P: Stoßrichtung / Wirkrichtung

## Patentansprüche

1. Meißel (1) bzw. Hammerbohrer (16), insbesondere Einsteckmeißel bzw. Einsteckhammerbohrer für kraftangetriebene Bohr- und Meißelhämmer mit einem Einsteckende (2), einem Meißelschaft (3) bzw. Bohrerschaft (3) und einem dem Einsteckende (2) gegenüberliegenden Meißelkopf (4) bzw. Bohrerkopf (4), wobei ein Durchmesser des Schaftes (3) in Richtung des Kopfes (4) wenigstens einmal von einem ersten, kleinen Durchmesser (d₁) auf einen zweiten, großen Durchmesser (d₂) zunimmt und von diesem wieder auf einen kleinen Durchmesser (d₃) abnimmt, wobei der erste, kleine Durchmesser (d₁) etwa dem dritten, kleinen Durchmesser (d₃ ) entspricht und die Durchmesseränderung zwischen einem auf ein Einsteckende (2) folgenden oberen Meißel- bzw. Bohrerschaftabschnitt (6) und einem unteren Meißel- bzw. Bohrerschaftabschnitt (7) erfolgt, **dadurch gekennzeichnet, dass** der obere Meißel- bzw. Bohrerschaftabschnitt (6) und der untere Meißel- bzw. Bohrerschaftabschnitt (7) gleiche Ausgangsdurchmesser (d₀) aufweisen, welche dem ersten Durchmesser (d₁) bzw. dem dritten Durchmesser (d₃) entsprechen und dass wenigstens ein durch die Querschnittsänderung gebildeter rotationssymmetrischer Wulst (8) durch eine sprunghafte und anschließend langsame Durchmesserzunahme von dem ersten Durchmesser (d₁) auf den zweiten, großen Durchmesser (d₂) und eine anschließende über einen kurzen Abschnitt sprunghaft erfolgende Verjüngung auf den dritten, kleineren Durchmesser (d₃), welcher dem ersten Durchmesser (d₁) entspricht, gebildet ist.

2. Meißel bzw. Hammerbohrer nach Anspruch 1, **dadurch gekennzeichnet, dass** eine Fläche und/oder eine Form der ersten, kleinen Querschnittsfläche einer Fläche und/oder einer Form einer dritten, kleinen Querschnittsfläche entspricht.

3. Meißel bzw. Hammerbohrer nach einem der vorhergehenden Ansprüche, **dadurch gekennzeichnet, dass** mehrere Wulste (8) unmittelbar hintereinander und/oder mit gleichen und/oder unterschiedlichen Abständen am Schaft (3) angeordnet sind.

4. Meißel bzw. Hammerbohrer nach einem der vorhergehenden Anspürche, **dadurch gekennzeichnet, dass** der dritte, kleine Durchmesser (d₃) bzw. die dritte, kleine Querschnittsfläche (C) eines ersten Wulstes (8) etwa dem ersten, kleinen Durchmesser (d₄) bzw. der ersten kleinen Querschnittsfläche (D) eines zweiten bzw. nachfolgenden Wulstes (8) entspricht.

5. Meißel bzw. Hammerbohrer nach einem der vorhergehenden Ansprüche, **dadurch gekennzeichnet, dass** der erste, kleine Durchmesser (d₁, d₄) zum zweiten, großen Durchmesser (d₂, d₅) ein Verhältnis von etwa 1 : 1,6 aufweist.

6. Meißel bzw. Hammerbohrer nach einem der vorhergehenden Ansprüche, **dadurch gekennzeichnet, dass** der dritte, kleine Durchmesser (d₃, d₆) zum zweiten, großen Durchmesser (d₂, d₅) ein Verhältnis von etwa 1 : 1,2 aufweist.

7. Meißel bzw. Hammerbohrer nach einem der vorhergehenden Ansprüche, **dadurch gekennzeichnet, dass** wenigstens zwei Wulste (8) in identischer Orientierung hintereinander angeordnet sind.

8. Meißel bzw. Hammerbohrer nach einem der vorhergehenden Ansprüche, **dadurch gekennzeichnet, dass** der Wulst (8) in der dem Einsteckende zugewandten Hälfte des Schaftes (3) angeordnet ist.

9. Meißel bzw. Hammerbohrer nach einem der vorhergehenden Ansprüche, **dadurch gekennzeichnet, dass** der Wulst (8) insbesondere bei Hammerbohrern (16) vom Einsteckende (2) einen Abstand (g) aufweist, welcher etwa einer zweifachen bis vierfachen Länge eines in dem kraftangetriebenen Bohr- bzw. Meißelhammer angeordneten Schlägers entspricht.

10. Meißel bzw. Hammerbohrer nach einem der vorhergehenden Ansprüche, **dadurch gekennzeichnet, dass** der Wulst (8) insbesondere bei Hammerbohrern (16) eine Masse (m) aufweist, welche etwa dem 0,2-fachen bis 0,7-fachen einer Masse des im kraftangetriebenen Bohr- bzw. Meißelhammer angeordneten Schlägers entspricht.

## Claims

1. Chisel (1) or hammer drill bit (16), in particular an insertion chisel or insertion hammer drill bit for powered rotary and demolition hammers, comprising an insertion end (2), a chisel shank (3) or drill bit shank (3) and a chisel tip (4) or drill bit tip (4) opposite the insertion end (2), wherein a diameter of the shank (3) increases in the direction of the tip (4) at least once from a first, small diameter (d₁) to a second, large diameter (d₂) and decreases again from the latter to a small diameter (d₃), wherein the first, small diameter (d₁) corresponds approximately to the third, small diameter (d₃) and the change in diameter is effected between a top chisel or drill bit shank section (6) following the insertion end (2) and a bottom chisel or drill bit shank section (7), **characterized in that** the top chisel or drill bit shank section (6) and the bottom chisel or drill bit shank section (7) have the same initial diameter (d₀) which corresponds to the first diameter (d₁) or the third diameter (d₃) and **in that** at least one rotationally symmetrical bead (8) formed by the cross-sectional change is formed by an abrupt and then gradual diameter increase from the first diameter (d₁) to the second, large diameter (d₂) and by a subsequent narrowing, abruptly effected over a short section, to the third, smaller diameter (d₃), which corresponds to the first diameter (d₁).

2. Chisel or hammer drill bit according to Claim 1, **characterized in that** a surface and/or a shape of the first, small cross-sectional area corresponds to a surface and/or a shape of a third, small cross-sectional area.

3. Chisel or hammer drill bit according to either of the preceding claims, **characterized in that** a plurality of beads (8) are arranged directly one behind the other and/or at the same and/or different distances apart on the shank (3).

4. Chisel or hammer drill bit according to one of the preceding claims, **characterized in that** the third, small diameter (d₃) or the third, small cross-sectional area (C) of a first bead (8) corresponds approximately to the first, small diameter (d₄) or the first small cross-sectional area (D) of a second or following bead (8).

5. Chisel or hammer drill bit according to one of the preceding claims, **characterized in that** the first, small diameter (d₁, d₄) is in a ratio of about 1:1.6 to the second, large diameter (d₂, d₅).

6. Chisel or hammer drill bit according to one of the preceding claims, **characterized in that** the third, small diameter (d₃, d₆) is in a ratio of about 1:1.2 to the second, large diameter (d₂, d₅).

7. Chisel or hammer drill bit according to one of the preceding claims, **characterized in that** at least two beads (8) are arranged in identical orientation one behind the other.

8. Chisel or hammer drill bit according to one of the preceding claims, **characterized in that** the bead (8) is arranged **in that** half of the shank (3) which faces the insertion end.

9. Chisel or hammer drill bit according to one of the preceding claims, **characterized in that** the bead (8), in particular in hammer drill bits (16), is at a distance (g) from the insertion end (2) which corresponds to about two times to four times the length of a striker arranged in the powered rotary or demolition hammer.

10. Chisel or hammer drill bit according to one of the preceding claims, **characterized in that** the bead (8), in particular in hammer drill bits (16), has a mass (m) which is about 0.2 times to 0.7 times the mass of the striker arranged in the powered rotary or demolition hammer.

## Revendications

1. Ciseau (1), ou foret (16), notamment ciseau insérable ou foret insérable pour un marteau perforateur ou un marteau piqueur entraîné par une force, comprenant une extrémité d'insertion (2), une tige de ciseau (3) ou une tige de foret (3) et une tête de ciseau (4) ou une tête de foret (4) opposée à l'extrémité d'insertion (2), un diamètre de la tige (3) augmentant dans la direction de la tête (4) au moins une fois d'un premier petit diamètre (d₁) à un deuxième grand diamètre (d₂) et diminuant à nouveau depuis celui-ci jusqu'à un petit diamètre (d₃), le premier petit diamètre (d₁) correspondant approximativement au troisième petit diamètre (d₃) et la variation de diamètre ayant lieu entre une portion de tige de foret ou de ciseau supérieure (6) suivant une extrémité d'insertion (2), et une portion de tige de foret ou de ciseau inférieure (7), **caractérisé en ce que** la portion de tige de foret ou de ciseau supérieure (6) et la portion de tige de foret ou de ciseau inférieure (7) présentent les mêmes diamètres de départ (d₀), qui correspondent au premier diamètre (d₁) ou au troisième diamètre (d₃) et **en ce qu'**au moins un boudin à symétrie de révolution (8) formé par la variation de section transversale est formé par une augmentation de diamètre par sauts puis progressive du premier diamètre (d₁) au deuxième grand diamètre (d₂) et une réduction suivante s'effectuant par sauts sur une courte portion au troisième diamètre plus petit (d₃), qui correspond au premier diamètre (d₁).

2. Ciseau ou foret selon la revendication 1, **caractérisé en ce qu'**une surface et/ou une forme de la première petite surface en section transversale correspond à une surface et/ou une forme d'une troisième petite surface en section transversale.

3. Ciseau ou foret selon l'une quelconque des revendications précédentes, **caractérisé en ce que** plusieurs boudins (8) sont disposés immédiatement les uns derrière les autres et/ou à distances égales et/ou différentes sur la tige (3).

4. Ciseau ou foret selon l'une quelconque des revendications précédentes, **caractérisé en ce que** le troisième petit diamètre (d₃) ou la troisième petite surface en section transversale (C) d'un premier boudin (8) correspond approximativement au premier petit diamètre (d₄) ou à la première petite surface en section transversale (D) d'un deuxième boudin (8) ou d'un boudin suivant.

5. Ciseau ou foret selon l'une quelconque des revendications précédentes, **caractérisé en ce que** le premier petit diamètre (d₁, d₄) présente, par rapport au deuxième grand diamètre (d₂, d₅), un rapport d'environ 1 à 1,6.

6. Ciseau ou foret selon l'une quelconque des revendications précédentes, **caractérisé en ce que** le troisième petit diamètre (d₃, d₆) présente, par rapport au deuxième grand diamètre (d₂, d₅), un rapport d'environ 1 à 1,2.

7. Ciseau ou foret selon l'une quelconque des revendications précédentes, **caractérisé en ce qu'**au moins deux boudins (8) sont disposés l'un derrière l'autre dans la même orientation.

8. Ciseau ou foret selon l'une quelconque des revendications précédentes, **caractérisé en ce que** le boudin (8) est disposé dans la moitié de la tige (3) tournée vers l'extrémité d'insertion.

9. Ciseau ou foret selon l'une quelconque des revendications précédentes, **caractérisé en ce que** le boudin (8), en particulier dans le cas de forets (16), présente un espacement (g) par rapport à l'extrémité d'insertion (2), qui correspond approximativement au double jusqu'au quadruple de la longueur d'un outil de frappe disposé dans le marteau perforateur ou le marteau piqueur entraîné par force.

10. Ciseau ou foret selon l'une quelconque des revendications précédentes, **caractérisé en ce que** le boudin (8), en particulier dans le cas de forets (16), présente une masse (m) qui correspond approximativement à 0,2 à 0,7 7 fois la masse de l'outil de frappe disposé dans le marteau perforateur ou le marteau piqueur entraîné par force.
